# EUROPEAN PATENT SPECIFICATION

(11) **EP 2 971 957 B1**
(45) Date of publication and mention of the grant of the patent: **11.07.2018**
(21) Application number: 14711602.4
(22) Date of filing: 17.03.2014
(51) Int. Cl.: F23D 14/06, F23D 14/62, A47J 37/07

(54) **COOKING APPARATUS**
KOCHVORRICHTUNG
APPAREIL DE CUISSON

(30) Priority: 15.03.2013 GB 201304745
(43) Date of publication of application: 20.01.2016
(73) Proprietor: Active Food Systems Limited, Oxfordshire OX11 9ED (GB)
(72) Inventor: CADBURY, George Justin Peter, Oxfordshire OX11 9ED (GB)
(74) Representative: Boult Wade Tennant
(86) International application number: PCT/GB2014/050836
(87) International publication number: WO 2014/140649

(56) References cited:
- WO-A1-2013/006849
- CN-A- 1 648 523
- CN-U- 202 598 518
- DE-A1- 19 850 939
- US-A- 6 067 978
- US-A1- 2008 000 468

## Description

The present invention relates to apparatus for cooking food by a barbeque grilling method.

US 5,676,049 describes a barbeque cooking appliance which provides first and second sources of pressurised air to improve combustion efficiency. In practise, this appliance has been found liable to produce an uneven flame, intolerant of slight changes in gas pressure. This can result in an uneven heat spread across the grill which is undesirable for efficient cooking of food. Other related combustion appliances are known from CN 202 598 518 U and CN 1 648 523 A. The present invention provides a combustion mixture inlet assembly for a cooking appliance, comprising upper and lower plates which are parallel and spaced from each other by a predetermined distance, a wall secured between the upper and lower plates defining an inner, the spaced, parallel plates extending outwardly beyond the wall in all directions to define an outer chamber surrounding the inner chamber, a plurality of apertures in the wall to allow air between the upper and lower plates to enter the inner chamber, an inlet in the base of the inner chamber for supplying fuel into the inner chamber, and an outlet in the top of the inner chamber.

This arrangement provides for effective mixing of air and fuel in order to ensure the most efficient combustion mixture is supplied to a burner, to produce an even, consistent and very hot flame.

Preferably, the wall is square in order to define a square inner chamber and each of the four faces of the square wall defines three apertures.

Preferably, the inlet assembly further comprises a burner mounted on the upper plate over the outlet, the burner defining an interior volume which communicates with the inner chamber for receiving the fuel/air mixture from the inner chamber, and at least one bar spanning the outlet to assist with mixing of the fuel and air.

Preferably, the burner assembly provides two annular outlets for the fuel/air mixture, thereby to create a dual layer flame when the mixture is ignited.

Preferably, the burner includes a restriction between the interior volume and the annular outlets.

The present invention also provides a cooking appliance comprising a base assembly formed of heat resistant material defining at least one aperture, and at least one combustion mixture inlet assembly as described above, wherein the inlet assembly is located beneath the base assembly, such that a burner mounted on the inlet assembly extends upwardly through a respective aperture.

In a preferred embodiment, the base assembly defines two apertures, and two inlet assemblies and two burners are provided.

Preferably, the base assembly of the cooking appliance comprises four interlocking segments.

Preferably, the base assembly comprises a first pair of segments defining male interlocking structures and a second pair of segments defining female interlocking structures, and the segments are arranged alternately with the male interlocking structures engaging the female interlocking structures.

The invention will now be described in detail, by way of example only, with reference to the accompanying drawings in which:
Figure 1 is a perspective view of a base assembly forming part of the apparatus of the present invention;
Figure 2 shows a male block used to create the base assembly of Figure 1;
Figure 2a shows how two male blocks fit together;
Figure 3 shows a female block used to create the base assembly of Figure 1;
Figure 3a shows how two female blocks fit together;
Figure 3b shows a detail of Figure 3 to illustrate the undercut portion;

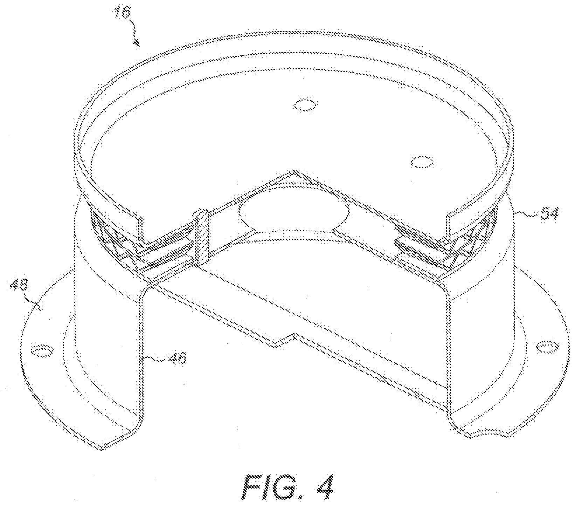

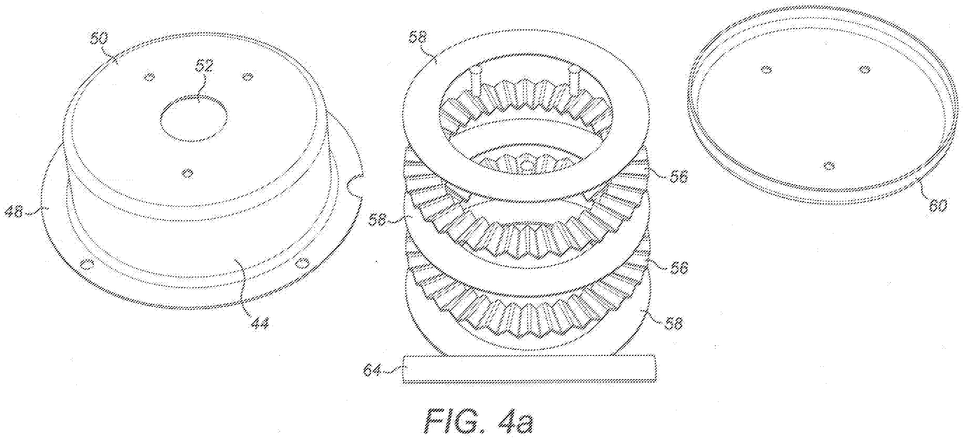

Figure 4 shows a partly cut-away view of a burner for the apparatus;
Figure 4a shows an exploded view of the burner of Figure 4;
Figure 5 shows a perspective view of the burner in conjunction with an inlet assembly for the apparatus of the present invention;
Figures 5a and 5b show side and end views of the assembly of Figure 5; and
Figure 5c shows a perspective cut-away view of the inlet assembly of Figure 5 without the burner.

The cooking apparatus 10 of the present invention comprises a base assembly 12 formed of heat resistant ceramic material. The base assembly 12 is a tray-like structure with a base 12a and side wall 12b. The base 12a defines apertures 14 for receiving burners 16. In this example, the base assembly 12 receives 2 burners although an apparatus with a single burner or more than two is also possible.

For ease of manufacture and transport, the base assembly 12 is preferably formed of four blocks which fit together to form the tray-like structure. In this example, the base assembly 12 comprises two male blocks 18 and two female blocks 20 arranged alternately.

Each male block 18 has two outside edges 22 forming the outside walls 12a of the base assembly 12 and two inside walls 24 which mate with adjacent female blocks. One inside edge 24 defines a semi circular opening 26.

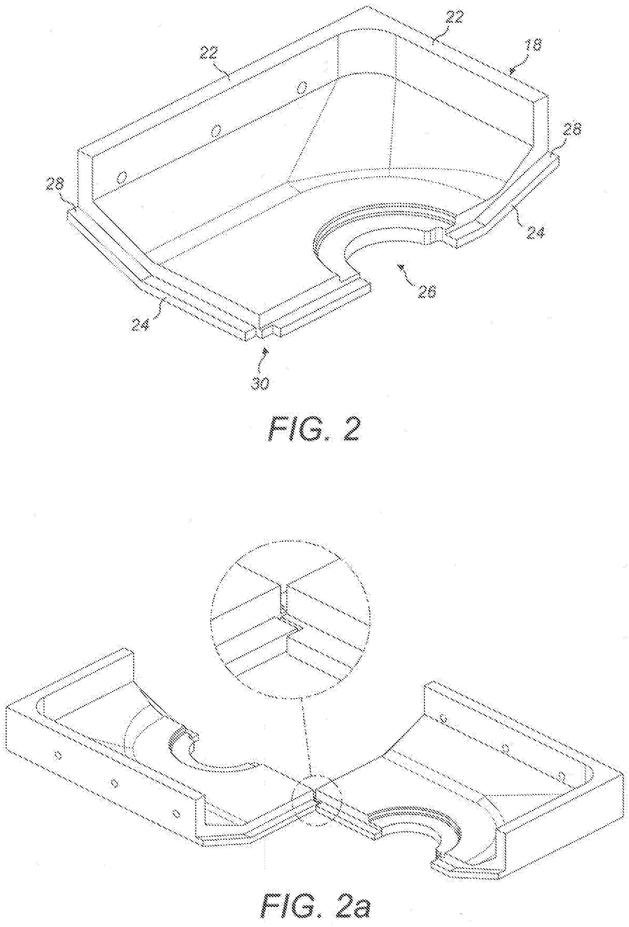

Both inside edges 24 are stepped to form a projecting ledge 28. Where the two inside edges 24 meet, the ledge 28 is formed with further cut out to provide a two-step profile 30 as best seen in Figure 2. In use, two male blocks 18 are positioned diagonally opposed to one another such that the two-seep profile 30 of one block 18 mates with the two step profile 30 of the other block 18 to locate the two blocks together as shown in Figure 2a.

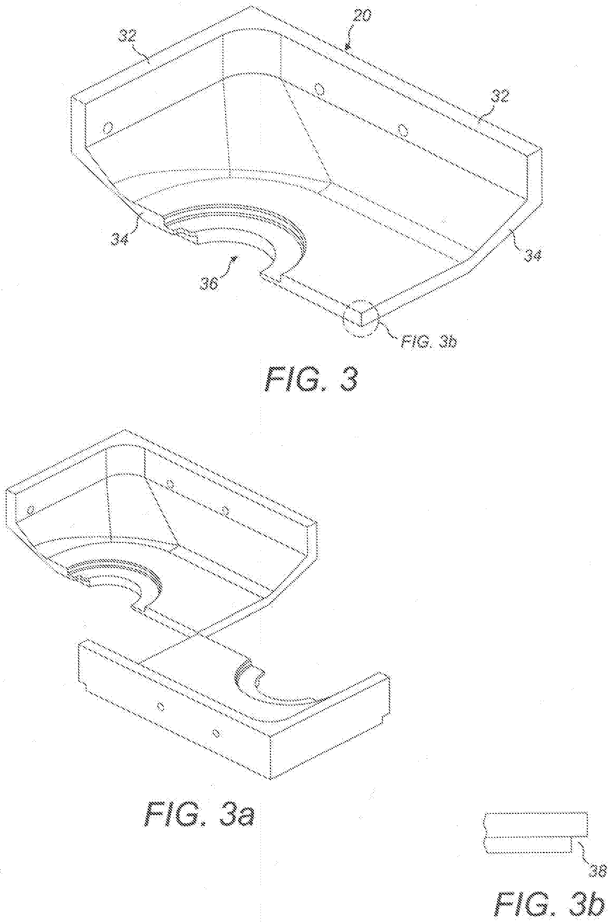

Each female block 20 also comprises two outside edges 32 forming parts of the outside wall 12a of the base assembly 12, and two inside edges 34 which mate with adjacent inside edges 24 of the male blocks 18. One inside edge 34 defines a semi-circular opening 36. Both the inside edges 34 are formed with an undercut portion 38 as shown in the detail view of Figure 3b. Therefore, when assembled, the undercut portion 38 of each female block 20 receives the projecting ledges 28 of the two adjacent male blocks 18 in order to locate all four blocks together to create the base assembly 12.

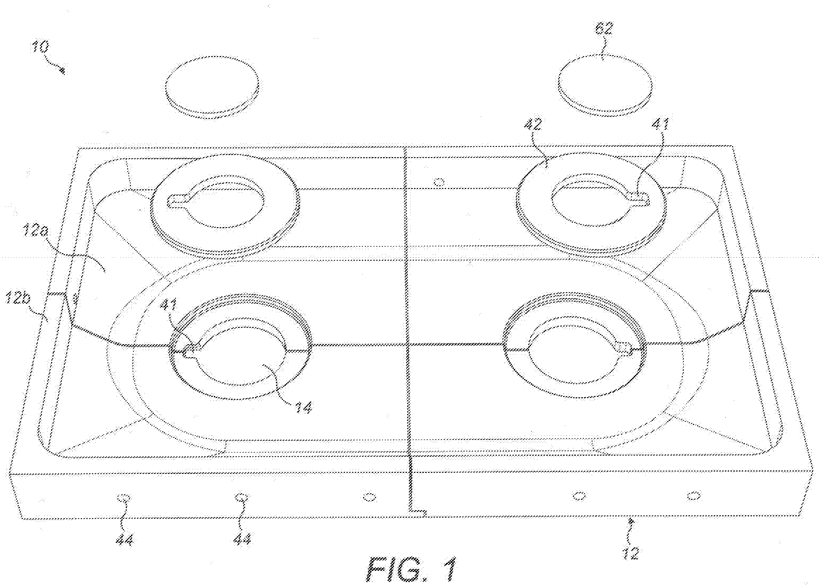

The semi-circular openings 26 and 36 in the male and female blocks 18, 20 respectively face one another in order to define a circular aperture 14 for receiving a gas burner 16. The male and female blocks 18, 20 may further define a shallow semi-circular recess around the openings 26, 36 so that when assembled they form an annular recess 40 around each aperture 14. A ceramic collar 42 (seen in Figure 1) may be received in the annular recess 40 to form a heat resistant protection around the base of the burner 16. The collar 42 and recess 40 are formed with corresponding notches 41 for receiving an igniter in use.

The perimeter wall 12b of the ceramic base 12 defines a plurality of apertures 44 for supplying air as described further below.

Each burner 16 comprises a base 44 with a cylindrical wall 46, a lower annular flange 48 for mounting the burner 16 to another structure and an upper circular wall 50 defining a central opening 52. This provides a restriction between the volume within the base 44 and the burner outlet 54 which is mounted on the base 44. The burner outlet 54 is made up of a series of washers 56, 58. There are two crimped or jagged washers 56 which have a zigzag profile, sandwiched between three flat washers 58. A circular plate 60 covers the outlet 54 to provide the top of the burner 16. In use, a heat resistant ceramic disc 62 (seen in Figure 1) may be located on the circular plate 60 to form the top of the burner.

A bar 64 extends diametrically across the open lower end of the burner base 44.

Each burner 16 is mounted on a combustion mixture inlet assembly 65 formed of upper and lower metal plates 66, 68. The burner 16 is secured to the upper metal plate 66. When the cooking apparatus 10 is assembled, the upper metal plate 66 is located beneath the ceramic base assembly 12 with the burner 16 protruding up through an aperture 14.

The lower metal plate 68 lies below and parallel to the first metal plate 66. Spacers 70 secured to the upper and lower metal plates 66, 68 hold the plates at a predetermined spacing to create a sandwich-like structure.

Between the upper and lower metal plates 66, 68 and directly beneath the burner 16, a mixing chamber is created by a wall 72 which extends between the plates 66, 68 to enclose a chamber 74. Preferably, the wall 72 is square and therefore encloses a square chamber 74. Each of the four faces of the wall 72 defines a plurality, and preferably three, small apertures 76, making 12 apertures in total. The apertures 76 are evenly spaced around the wall 72. In use the lower end of the chamber 74 is closed by a closure plate containing a central aperture (not shown) for receiving a fuel supply, typically a gas supply. The upper end of the chamber 74 is open and communicates with the volume within the base 44 of the burner 16.

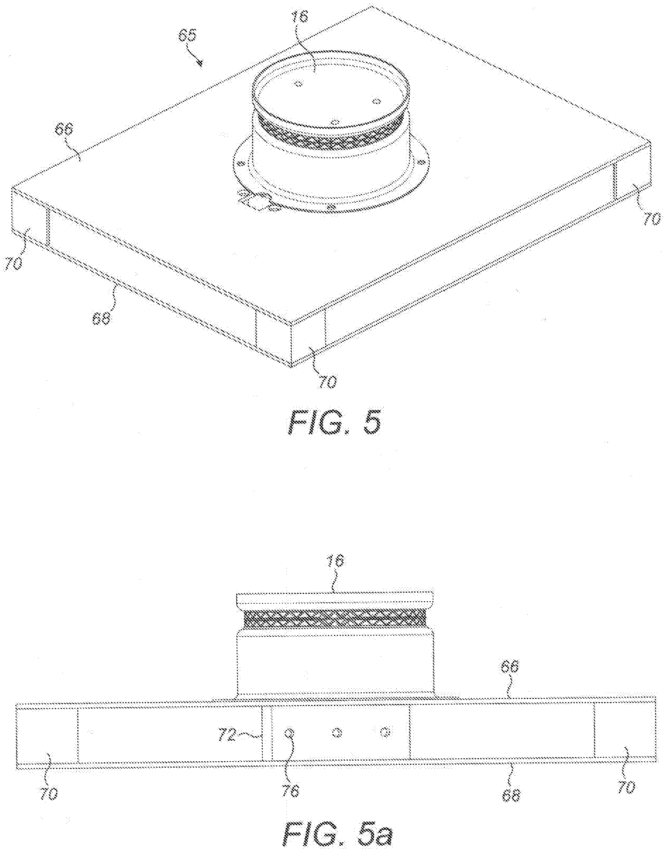

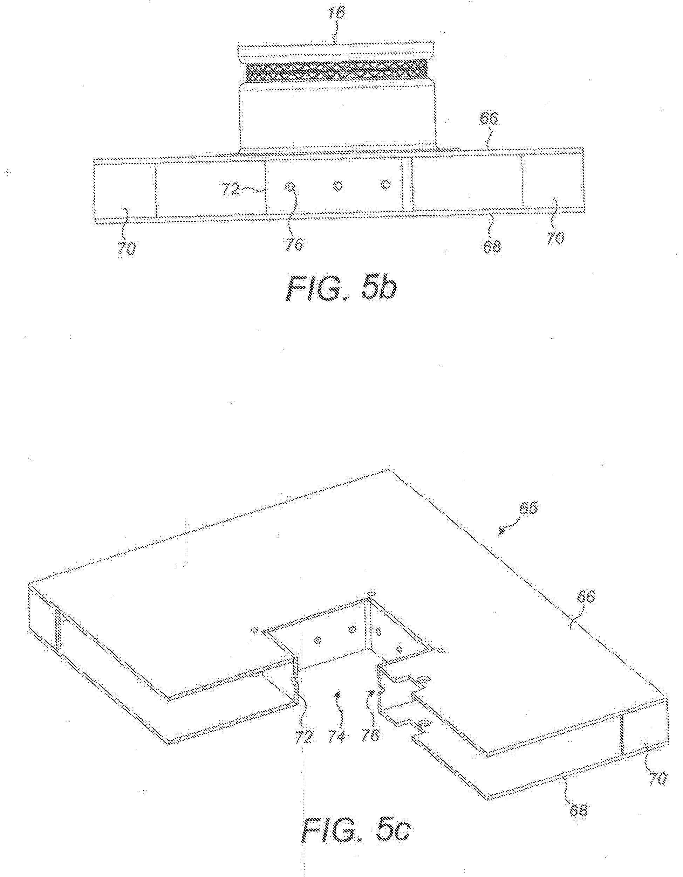

The chamber 74 formed by the wall 72 occupies only a relatively small, generally central area between the plates 66, 68. In other words, the plates 66, 68 extend beyond the wall 72, still spaced and parallel to each other, as seen in Figures 5-5C. The gap between the plates 66, 68 outside the wall 72 thus defines an outer chamber surrounding the wall 72 on all sides. Air flows through this outer chamber to the apertures 76 in the wall 72. This helps to control and smooth out the flow of air to the apertures 76.

In use, a fan (not shown) supplies pressurised air into the outer chamber, i.e., the gap between the upper and lower metal plates 66, 68. Air enters the chamber 74 as a plurality of jets via the apertures 76 and mixes with gas within the chamber 74. The gas is injected vertically upwardly into the chamber 74 and therefore impinges on the bar 64 which spans the opening at the lower end of the burner base 44. The bar 64 therefore assists with diffusion of gas injected into the chamber 74, to enable thorough mixing with air entering through the apertures 76. Further mixing of gas and air occurs in the volume formed within the burner base 44. This arrangement provides for optimum mixing of air and gas at the desired ratio for most efficient combustion.

The gas/air mixture then passes up through the opening 52 in the burner base 44 and exits the burner 16 by flowing through the gaps created between the zigzag and flat washers 56, 58. The mixture is ignited by an igniter (not shown) situated adjacent the exterior of the burner 16. A dual layer flame is thus created, a lower layer by ignition of the gas/air mixture passing between the lower and middle flat washers 58 and an upper layer by ignition of the gas/air mixture passing between the middle and upper washers 58. This dual flame provides an extremely high temperature for cooking over a large area.

Thus, the arrangement of the mixing chamber 74, apertures 76 and the diffuser bar 64 ensures the correct amount of air is injected and mixed thoroughly with gas for supply to the burner 16. If too little air is provided the mixture becomes too rich, i.e. fuel heavy, giving a lazy yellow lapping flame that will not fully atomise any fats from the food being cooked. If too much air is provided the combustion mixture becomes too lean so that the flame breaks away from the burner 16, producing a cool flame that will extinguish easily and is highly susceptible to fat dripping from the food.

In use, a rack or a solid conductive plate is placed over the ceramic base assembly 12 and the burners 16 and food placed on the rack/plate for cooking. The fan which supplies pressurised air to the combustion mixture inlet assembly 65 also supplies pressurised air through the apertures 44 formed in the perimeter wall 12b of the ceramic base assembly 12. This secondary air supply flattens or impinges the heat across the surface of the ceramic base assembly 12 giving optimum radiant heat distribution across the ceramic surfaces. This assists in ensuring that combustion occurs as efficiently as possible and provides an extremely high temperature. Cooking at the very high temperature provided by the apparatus 10 ensures that fats and oils from the food are completely combusted. Therefore, no drip tray is required to collect excess fats or oils and carbon deposits on the food or the cooking rack/plate are avoided.

## Claims

1. A combustion mixture inlet (65) assembly for a cooking appliance, comprising upper and lower plates (66, 68) which are parallel and spaced from each other by a predetermined distance, a wall (72) secured between the upper and lower plates (66, 68) defining an inner chamber (74), the spaced, parallel plates (66, 68) extending outwardly beyond the wall (72) in all directions to define an outer chamber surrounding the inner chamber (74), a plurality of apertures (76) in the wall (72) to allow air between the upper and lower plates (66, 68) to enter the inner chamber (74), an inlet in the base of the inner chamber (74) for supplying fuel into the inner chamber (74), and an outlet in the top of the inner chamber (74).

2. An inlet assembly (65) as claimed in claim 1, wherein the wall (72) is square in order to define a square inner chamber (74) and each of the four faces of the square wall (72) defines three apertures (76).

3. An inlet assembly (65) as claimed in claim 1 or claim 2, further comprising a burner (16) mounted on the upper plate (66) over the outlet, the burner (16) defining an inner volume which communicates with the inner chamber (74) for receiving a combustion mixture from the inner chamber (74), and at least one bar (64) spanning the outlet to assist with mixing of the air and fuel.

4. An inlet assembly (65) as claimed in claim 3, wherein the burner (16) comprises two annular outlets for the combustion mixture, thereby to create a dual layer flame when the mixture is ignited.

5. An inlet assembly (65) as claimed in claim 4, further comprising a restriction in the burner (16) between the interior volume and the annular outlets.

6. A cooking appliance (10) comprising a base assembly (12) of heat resistant material defining at least one aperture (14) and at least one combustion mixture inlet assembly (65) as claimed in any of claims 3-5, wherein an inlet assembly (65) is located beneath the base assembly (12) with a burner (16) extending upwardly through a respective aperture (14).

7. A cooking appliance (10) as claimed in claim 6, wherein the base assembly (12) defines two apertures (14) and further comprising two inlet assemblies (65) and two burners (16) .

8. A cooking appliance (10) as claimed in claim 6 or claim 7, wherein the base assembly (12) comprises four interlocking segments (18, 20).

9. A cooking appliance (10) as claimed in claim 8, wherein the base assembly (12) comprises a first pair of segments (18) defining male interlocking structures and a second pair of segments (20) defining female interlocking structures, wherein the segments are arranged alternately with the male interlocking structures engaging the female interlocking structures.

## Patentansprüche

1. Verbrennungsgemisch-Einlass- (65) Anordnung für eine Kochvorrichtung, welche eine obere und eine untere Platte (66, 68) aufweist, die zueinander parallel und voneinander um eine im Voraus festgelegte Distanz beabstandet sind, weiter eine Wandung (72), die zwischen der oberen und der unteren Platte (66, 68) sicher befestigt ist, wodurch eine innere Kammer (74) definiert wird, wobei sich die beabstandeten, parallelen Platten (66, 68) nach außen in alle Richtungen über die Wandung (72) hinaus erstrecken, um eine äußere Kammer zu definieren, die die innere Kammer (74) umgibt, weiter eine Vielzahl von Öffnungen (76) in der Wandung (72), um es Luft zwischen der oberen und der unteren Platte (66, 68) zu erlauben, in die innere Kammer (74) einzutreten, einen Einlass in der Basis der inneren Kammer (74) zur Zuführung von Brennstoff in die innere Kammer (74), sowie einen Auslass in der Oberseite der inneren Kammer (74).

2. Einlassanordnung (65) wie in Anspruch 1 beansprucht, **dadurch gekennzeichnet, dass** die Wandung (72) quadratisch ist, um eine quadratische innere Kammer (74) zu definieren, und jede der vier Seitenflächen der quadratischen Wandung (72) drei Öffnungen (76) definiert.

3. Einlassanordnung (65) wie in Anspruch 1 oder Anspruch 2 beansprucht, welche weiter einen Brenner (16) aufweist, der auf der oberen Platte (66) oberhalb des Auslasses angebracht ist, wobei der Brenner (16) ein inneres Volumen definiert, welches mit der inneren Kammer (74) in Verbindung steht, um ein Verbrennungsgemisch von der inneren Kammer (74) zu erhalten, sowie mindestens eine Stange (64), die den Auslass überspannt, um zur Mischung der Luft und des Brennstoffes beizutragen.

4. Einlassanordnung (65) wie in Anspruch 3 beansprucht, **dadurch gekennzeichnet, dass** der Brenner (16) zwei ringförmige Auslässe für das Verbrennungsgemisch aufweist, wodurch eine zweischichtige Flamme erzeugt wird, wenn das Gemisch entzündet wird.

5. Einlassanordnung (65) wie in Anspruch 4 beansprucht, welche weiter eine Restriktion in dem Brenner (16) zwischen dem Innenvolumen und den ringförmigen Auslässen aufweist.

6. Kochvorrichtung (10), welche eine Basisanordnung (12) aus einem wärmebeständigen Werkstoff aufweist, die mindestens eine Öffnung (14) und mindestens eine Verbrennungsgemisch-Einlass-Anordnung (65), wie in einem beliebigen der Ansprüche 3-5 beansprucht, aufweist, **dadurch gekennzeichnet, dass** eine Einlassanordnung (65) unterhalb der Basisanordnung (12) befindlich ist, wobei sich ein Brenner (16) nach oben durch eine entsprechende Öffnung (14) erstreckt.

7. Kochvorrichtung (10) wie in Anspruch 6 beansprucht, **dadurch gekennzeichnet, dass** die Basisanordnung (12) zwei Öffnungen (14) definiert, und welche weiter zwei Einlass-Anordnungen (65) sowie zwei Brenner (16) aufweist.

8. Kochvorrichtung (10) wie in Anspruch 6 oder Anspruch 7 beansprucht, **dadurch gekennzeichnet, dass** die Basisanordnung (12) vier ineinander greifende Segmente (18, 20) aufweist.

9. Kochvorrichtung (10) wie in Anspruch 8 beansprucht, **dadurch gekennzeichnet, dass** die Basisanordnung (12) ein erstes Paar von Segmenten (18) aufweist, welches positive ineinander greifende Strukturen definiert, sowie ein zweites Paar von Segmenten (20), welches negative ineinander greifende Strukturen definiert, **dadurch gekennzeichnet, dass** die Segmente abwechselnd angeordnet sind, wobei die positiven ineinander greifenden Strukturen mit den negativen ineinander greifenden Strukturen in Eingriff gelangen.

## Revendications

1. Ensemble d'entrée de mélange de combustion (65) pour un appareil de cuisson, comprenant des plaques supérieure et inférieure (66, 68) qui sont parallèles et espacées l'une de l'autre d'une distance prédéterminée, une paroi (72) fixée entre les plaques supérieure et inférieure (66, 68) définissant une chambre interne (74), les plaques parallèles espacées (66, 68) s'étendant vers l'extérieur au-delà de la paroi (72) dans toutes les directions pour définir une chambre externe entourant la chambre interne (74), une pluralité d'ouvertures (76) dans la paroi (72) pour permettre à l'air entre les plaques supérieure et inférieure (66, 68) d'entrer dans la chambre interne (74), une entrée dans la base de la chambre interne (74) pour fournir du combustible dans la chambre interne (74), et une sortie dans le haut de la chambre interne (74).

2. Ensemble d'entrée (65) selon la revendication 1, dans lequel la paroi (72) est carrée afin de définir une chambre interne carrée (74) et chacune des quatre faces de la paroi carrée (72) définit trois ouvertures (76).

3. Ensemble d'entrée (65) selon la revendication 1 ou la revendication 2, comprenant en outre un brûleur (16) monté sur la plaque supérieure (66) au-dessus la sortie, le brûleur (16) définissant un volume interne qui communique avec la chambre interne (74) pour recevoir un mélange de combustion depuis la chambre interne (74), et au moins une barre (64) couvrant la sortie pour faciliter le mélange de l'air et du combustible.

4. Ensemble d'entrée (65) selon la revendication 3, dans lequel le brûleur (16) comprend deux sorties annulaires pour le mélange de combustion, afin de créer une flamme à double couche lorsque le mélange est enflammé.

5. Ensemble d'entrée (65) selon la revendication 4, comprenant en outre une restriction dans le brûleur (16) entre le volume intérieur et les sorties annulaires.

6. Appareil de cuisson (10) comprenant un ensemble de base (12) en matériau résistant à la chaleur définissant au moins une ouverture (14) et au moins un ensemble d'entrée de mélange de combustion (65) selon l'une quelconque des revendications 3 à 5, dans lequel un ensemble d'entrée (65) est situé sous l'ensemble de base (12) avec un brûleur (16) s'étendant vers le haut à travers une ouverture respective (14) .

7. Appareil de cuisson (10) selon la revendication 6, dans lequel l'ensemble de base (12) définit deux ouvertures (14) et comprend en outre deux ensembles d'entrée (65) et deux brûleurs (16).

8. Appareil de cuisson (10) selon la revendication 6 ou la revendication 7, dans lequel l'ensemble de base (12) comprend quatre segments de verrouillage mutuel (18, 20).

9. Appareil de cuisson (10) selon la revendication 8, dans lequel l'ensemble de base (12) comprend une première paire de segments (18) définissant des structures de verrouillage mutuel mâles et une seconde paire de segments (20) définissant des structures de verrouillage mutuel femelles, dans lequel les segments sont agencés alternativement avec les structures de verrouillage mutuel mâles venant en prise avec les structures de verrouillage mutuel femelles.
